# EUROPÄISCHE PATENTSCHRIFT

(11) **EP 0 730 931 B1**
(45) Veröffentlichungstag und Bekanntmachung des Hinweises auf die Patenterteilung: **27.01.1999**
(21) Anmeldenummer: 96103620.9
(22) Anmeldetag: 08.03.1996
(51) Int. Cl.: B24B 23/03, B23B 31/11, B23D 69/00, B23D 67/12

(54) **Maschinelles Gerät zum Schleifen, Raspeln, Feilen oder Polieren**
Mechanised tool for grinding, rasping, filing or polishing
Outil mécanisé pour meuler, râper, limer ou polir

(30) Priorität: 10.03.1995 DE 29504138 U; 16.06.1995 US 491413
(43) Veröffentlichungstag der Anmeldung: 11.09.1996
(73) Patentinhaber: Buchter, Gerd, 65183 Wiesbaden (DE); Kimbel, Erich, 65183 Wiesbaden (DE); Taylor, Jill, 65183 Wiesbaden (DE)
(72) Erfinder: Buchter, Gerd, 65183 Wiesbaden (DE); Kimbel, Erich, 65183 Wiesbaden (DE); Taylor, Jill, 65183 Wiesbaden (DE)
(74) Vertreter: Blumbach, Kramer & Partner GbR

(56) Entgegenhaltungen:
- EP-A- 0 031 433
- WO-A-94/04312
- DE-U- 9 003 031
- GB-A- 1 143 677
- US-A- 3 226 885
- US-A- 3 903 657
- US-A- 3 907 257

## Beschreibung

Die Erfindung bezieht sich auf ein tragbares maschinelles Gerät zum Schleifen, Raspeln, Feilen oder Polieren nach dem Oberbegriff des Anspruchs 1. Ein solches Gerät ist aus EP-A-0 031 433 bekannt.

Für den Heimwerkermarkt gibt es eine große Anzahl von Elektrohandwerkzeugen, auch solche, mit denen geschliffen werden kann, während andere sich bedingt auch zum Raspeln oder Feilen eignen würden. Gängige Handschleifmaschinen, darunter Bandschleifer und Vibrationsschleifer, eignen sich in erster Linie zum Schleifen von ebenen Flächen. Wenn dagegen Kurvenflächen oder Kanten an Aussparungen in Werkstücken bearbeitet werden sollen, wie dies z. B. in runden Ausschnitten für Einsätze in Tischplatten vorkommt, gibt es hierfür kein maschinelles Werkzeug.

Elektrische Handbohrmaschinen können für Schleifarbeiten eingesetzt werden, wenn drehbare Schleifwerkzeuge im Spannfutter eingespannt werden. Erhältliche Schleifwerkzeuge haben einen kugelförmigen, kegelförmigen oder auch zylindrischen Schleifkopf und sind relativ klein, verglichen mit dem Werkzeugkörper von Bandschleifern oder Schwingschleifern. Während der Werkzeugkörper von Bandschleifern oder Schwingschleifern als Stütz- und Führungseinrichtung genutzt werden kann, geht dies mit dem Schleifkopf bei Handbohrmaschinen nicht. Stütz- und Führungseinrichtungen sind bei Handbohrmaschinen nicht vorgesehen; deshalb kann mit solchen verfügbaren Schleifwerkzeugen nur ungenau gearbeitet werden, wenn es gilt, eine geschwungene Innenkonturfläche zu schleifen. Bei den bekannten Handbohrmaschinen mit eingespanntem Schleifwerkzeug ist außerdem die Möglichkeit der Absaugung von Staub nicht gegeben.

Viele Handbohrmaschinen sind auch mit einem Schlagwerk ausgerüstet, so daß neben der Drehbewegung des Werkzeugs auch eine schlagende Hin- und Herbewegung ausgeführt wird. Wenn eine derartige Schlagbohrmaschine auf Schlagbohren eingestellt ist, eignet sie sich kaum dazu, mit einem eingespannten Schleifwerkzeug zu arbeiten. Eine solche Schlagbohrmaschine kann man nicht ruhig in der Hand halten, um damit Schleifarbeiten auszuführen, die zu einer geglätteten Oberfläche führen sollen.

In der EP-A-0 031 433 A2 ist ein motorgetriebenes Handwerkzeug bekannt geworden, dessen Bearbeitungswerkzeug außer einer Drehbewegung auch eine axiale Hin- und Herbewegung ausführt. Die Werkzeughalterung ist im Gehäuse des Geräts axial verschiebbar gelagert und mit einem seitlich angreifenden Verschiebeantrieb gekuppelt. Hierzu greift ein Stift in einer exzentrischen Nut an der Scheibe ein, die Teil eines Schneckenradgetriebes ist. Das Schneckenradgetriebe wird über eine Zahnradübersetzung vom Hauptmotor angetrieben. Die Anwendung eines Schneckenradgetriebes ist eine sehr teure Lösung für den Oszillationsantrieb.

Bei einer bekannten elektropneumatischen Pendelschleifmaschine mit Komplex-Schleifscheibe (DE-U-90 03 031) ist ein Werkzeughalter axial verschieblich auf der Abtriebswelle gelagert und wird durch die Abtriebswelle rotierend sowie durch einen gesonderten Antrieb axial oszillatorisch angetrieben. Soweit es sich um einfache Antriebe handelt, ist die Oszillationsbewegung zu heftig.

Der Erfindung liegt die Aufgabe zugrunde, ein tragbares maschinelles Gerät zum Schleifen, Raspeln oder Feilen zu schaffen, das wirtschaftlich hergestellt werden kann, einfach ist und im Verhältnis zur Rotation langsame Oszillationsbewegungen zu erzeugen ermöglicht.

Die gestellte Aufgabe wird aufgrund der Merkmale des Hauptanspruchs gelöst und durch die weiteren Maßnahmen der Unteransprüche weiterentwickelt und ausgestaltet.

Das neue Gerät zum Schleifen, Raspeln oder Feilen eignet sich insbesondere zur Bearbeitung von Innenflächen und Innenkanten von Werkstücken, ist jedoch auch für andere Zwecke brauchbar und vielfältig einsetzbar.

In einer bevorzugten Ausführungsform der Erfindung weist das in der Hand zu haltende Gerät die allgemeine Gestalt einer Stichsäge auf, und das Gehäuse umfaßt zwei Hohlräume, die einen Motor bzw. einen Antriebsmechanismus oder ein Getriebe umschließen. Eine Gleitkufenplatte ist als Führung und Stützeinrichtung vorgesehen, die in beiden Richtungen bis zu 45° aus ihrer neutralen Stellung geschwenkt werden kann, in welcher sich das Werkzeug senkrecht zur Ebene der Basisplatte erstreckt.

Der Antriebsmechanismus bzw. das Getriebe ist zur Erzeugung einer Dreh- und Oszillationsbewegung eines Werkzeugschaftes ausgebildet, der als Werkzeughalter dient. Mit diesem Gerät kann ruhiger entlang der zu bearbeitenden Fläche gefahren werden, als dies bei einem rein rotierenden Werkzeug der Fall wäre. Außerdem ist das erzielbare Schliffbild bei hölzernen Werkstücken besser, da Riefen und Brandspuren vermieden werden. Außerdem ist die Materialabnahme vom Werkstück verbessert, und das Werkzeug hat eine längere Standzeit.

Alle Ausführungsformen der Erfindung können mit Saugleitungen versehen sein, um den sich entwickelnden Staub abzusaugen.

Der Elektromotor des Geräts kann über Kabel betrieben werden; es ist aber auch möglich, Akkumulatoren oder Batterien zur Stromversorgung vorzusehen.

Weitere Einzelheiten der Erfindung werden anhand der Zeichnung beschrieben. Dabei zeigt:
- Fig.: 1 eine schematische Seitenansicht des Geräts, teilweise geschnitten,
- Fig. 2: einen vergrößerte Einzelheit aus Fig. 1,
- Fig. 3: eine Draufsicht auf die Einzelheit der Fig. 2,
- Fig. 4: einen Schnitt durch ein Werkzeug,
- Fig. 5: eine auseinandergezogene Darstellung eines Werkzeughalters und eines Werkzeugs, mit teilweise weggebrochenen Teilen,
- Fig. 6: eine perspektivische Ansicht des Geräts bei der Handhabung und
- Fig. 7: eine weitere perspektivische Ansicht des Geräts bei der Handhabung.

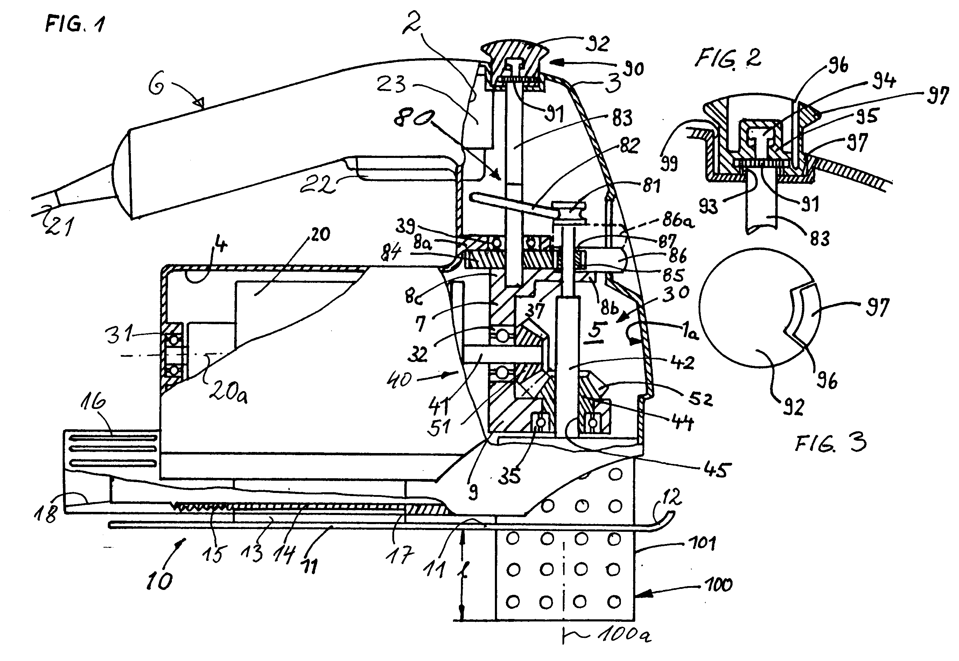

Das in der Hand zu haltende maschinelle Gerät ist in Fig. 1 gezeigt und weist ein Gehäuse 1 auf, das im groben die Umrisse einer Stichsäge aufweist. Das Gehäuse 1 besteht im wesentlichen aus zwei Schalenhälften 2 und 3, die aufeinander passen und durch nicht gezeigte Schraubbolzen zusammengehalten werden. Das Gehäuse 1 umschließt zwei Haupthohlräume 4 und 5. Der Hohlraum 4 ist zur Aufnahme eines Elektromotors 20 vorgesehen und bestimmt eine Motorachse 20a. Der andere Hohlraum 5 ist zur Aufnahme eines Antriebsmechanismus 30 vorgesehen und bestimmt eine Werkzeugachse 100a, die senkrecht zur Motorachse 20a steht. Der Antriebsmechanismus dient zum Rotieren und Oszillieren eines Werkzeugs 100, das eine äußere zylindrische Oberfläche 101 besitzt und zum Schleifen, Raspeln oder Feilen eines Werkstücks ausgebildet sein kann. An der Unterseite des Gehäuses 1 und des Motors 20 erstreckt sich eine Führungs- und Stützeinrichtung 10 parallel zur Motorachse 20a und umfaßt eine Gleitkufenplatte 11 als Gerätefuß mit einer Aussparung 12, durch die sich das Werkzeug 100 erstreckt. Die Platte 11 ist an einer Buchse 13 befestigt, die wenigstens einen teilweise kreisförmigen Querschnitt aufweist. Die Buchse 13 ist schwenkbar in einer nicht gezeigten, teilweise kreiszylinderförmigen Aussparung des Gehäuses 1 gelagert und wird gleichzeitig am Gehäuse unverlierbar festgehalten. Hierzu können die Schalenhälften 2, 3 den Umriß der Buchse 13 um ungefähr 200 bis 300 Zentriwinkel umgreifen und halten, während die Buchse 13 mit der Kufenplatte 11 um die Buchsenachse geschwenkt werden kann, um eine Schwenkverbindung zu bilden. Ein Rohr 14 erstreckt sich durch die Buchse 13, so daß dessen inneres Ende benachbart dem Werkzeug 100 zu liegen kommt, während das äußere Ende aus dem Gehäuse 1 vorsteht und als Drehknopf 16 gestaltet ist. Das Rohr 14 und das Gehäuse 1 weisen ineinandergreifende Gewinde 15 auf, so daß das Rohr 14 parallel zur Motorachse 20a verschoben werden kann. Das Rohr 14 weist einen Kragen 17 auf, der an der Buchse 13 anliegt. Die Platte 11 kann gegenüber der Achse der Buchse 14 bis zu 45° aus der horizontalen neutralen Stellung verschwenkt werden und dann in der eingestellten Stellung dadurch fixiert werden, daß der Drehknopf 16 angezogen wird, so daß sich der Kragen 17 gegen die Buchse 13 preßt und die Buchse 14 in der eingestellten Stellung festklemmt. Das Gerät kann mit einem nicht gezeigten Saugsystem verbunden werden, und zu diesem Zweck ist das Rohrende bei 18 dazu vorbereitet, mit einer weiteren, nicht gezeigten Rohrleitung verbunden zu werden. Die Öffnung des Rohres 14, benachbart dem Werkzeughalter 70 oder dem oberen Ende des Werkzeugs 100, dient als Saugöffnung.

In den bevorzugten Ausführungsformen ist das Gehäuse 1 auch mit einem Handgriff 6 versehen und dementsprechend geformt. Wie gezeigt, ist ein elektrisches Kabel 21 durch die Wandung des Griffs 6 in das Gehäuseinnere geführt, wo Verbindungen zu einem Schalter 22 und zum Motor 20 hergestellt werden, um diesem Strom zuzuführen bzw. abzuschalten. Im Inneren des Griffs 6 können auch Sicherheitseinrichtungen 23 untergebracht werden. Ferner ist ein Umschalten für Rechts-Links-Lauf des Motors 20 vorgesehen.

Der Elektromotor 20 weist eine Welle 41 auf, die in Lagern 31 und 32 gelagert ist und welche die Antriebswelle für den Antriebsmechanismus 30 darstellt. Dieser Mechanismus 30 umfaßt ein Zahnradgetriebe 40 und einen Oszillationsmechanismus 80. Es sind eine Abtriebswelle 42 und zwei Zwischenwellen 44, 83 vorgesehen, darunter eine Hohlwelle 44 und eine Einstellwelle 83. Um diese Wellen zu lagern, ist der zweite Hohlraum 5 von Trennwänden 7, 8a, 8b, 8c und 9 umgeben, die jeweils Bohrungen zur Aufnahme von Lagern 32, 34, 35 und 39 aufweisen. Die Trennwände 8 und 9 sind senkrecht zur Trennwand 7 an deren Enden angeordnet. Das Zahnradgetriebe 40 umfaßt auch ineinandergreifende Kegelzahnräder 51, 52, um die Kraft zwischen den Wellen 41, 44 und 42 zu übertragen. Die Welle 42 erstreckt sich durch den Hohlraum 5 nach außen und bildet die Abtriebswelle. Kupplungsausbildungen 45 sind auf der Innenseite der Hohlwelle 44 und der Außenoberfläche der Abtriebswelle 42 angebracht, so daß sich die Welle 42 axial verschieben kann, jedoch in Drehrichtung angetrieben wird, wenn sich die Hohlwelle 44 dreht. Eine derartige Kupplung 45 kann durch Keilverzahnungen an den Wellen 42, 44 realisiert werden, jedoch ist auch eine Gleitkeil-Nut-Kombination für den erwünschten Zweck ausreichend.

Die Oszillationseinrichtung 80 erzeugt die Auf- und Abbewegung der Abtriebswelle 42 und ist zufolge eines Schaltzahnräderpaares 84, 85 ein- und ausschaltbar. Das obere Ende der Abtriebswelle 42 steht mit einer Folgereinrichtung 81 in der Form einer Rolle mit Umfangsnut in Verbindung. Die Oszillationseinrichtung 80 weist eine mit der Welle 83 umlaufende Schrägscheibe oder Taumelscheibe 82 auf, deren Rand in die Nut der Rolle 81 eingreift und auf diese Weise für die Auf- und Abwärtsbewegung der Rolle 81 und der Abtriebswelle 42 sorgt.

Die Schrägscheibe 82 ist an der Zwischenwelle 83 befestigt, die gegenüber axialer Bewegung festgehalten wird und in dem Lager 39 gelagert sowie von einem Zahnrad 84 gedreht wird, welches wiederum von einem schaltbaren Zahnrad 85 angetrieben wird, das in Eingriff mit der Kupplungseinrichtung 45 der Abtriebswelle 42 steht. In der Praxis kann die Welle 42 an ihren oberen und unteren Enden oder auch entlang ihrer gesamten Länge mit Keilverzahnungen versehen sein.

Wenn der Motor 20 eingeschaltet wird, treibt die Antriebswelle 41 über die Kegelzahnräder 51, 52, die Zwischenwelle 44 und die Keilverzahnungen 45 die Abtriebswelle 42 an, die infolge der Wirkung der Folgeeinrichtung 81 und der Schrägscheibe 82 hin- und herbewegt wird. Es wird darauf hingewiesen, daß das Durchmesserverhältnis der Zahnräder 85/84, welches im Bereich von 1:5 und 1:12 und vorzugsweise im Bereich von 1:7 und 1:10 liegt, die Anzahl der Drehungen der Abtriebswelle während einer Auf- und Abbewegung bestimmt.

Das Zahnrad 85 wird durch einen verriegelbaren Gleitschalter 86 schaltbar gemacht, der eine Gabeleinrichtung 87 besitzt, die an der Ober- und Unterseite des Zahnrades 85 angreift. Wenn der Gleitschalter 86 in die obere, bei 86a gestrichelte Stellung verschoben wird, an der er verriegelt werden kann, geraten die Zahnräder 85, 84 außer Kämmeingriff, und die Oszillationsbewegung wird ausgeschaltet, d. h. das Werkzeug 100 rotiert einfach ohne Hin- und Herbewegung.

Für diese Gebrauchsart (einfaches Drehen) ist eine Einstellvorrichtung 90 vorgesehen, um die Stellung des Werkzeugs 100 relativ zur Ebene des Gleitschuhs 11 einzustellen. Die Welle 83 weist an ihrem oberen Ende eine Scheibe 91 auf, die außerhalb des Hohlraums 5 des Gehäuses 1 angeordnet ist, und wird von einem Drehknopf 92 umgriffen, der lose über die Scheibe 91 paßt, ohne von der Scheibe 91 gedreht zu werden, wenn sich die Welle 83 dreht. Die Scheibe 91 weist an ihrem äußeren Umfang Wellungen oder Zähne auf, die von entsprechenden Zähnen 93 des Drehknopfes 92 ergriffen werden können, wenn dieser etwas angehoben wird, um den Drehknopf 92 an die Scheibe 91 anzukuppeln und somit eine Verbindung zur Welle 83 zu schaffen. Das Anheben des Drehknopfes 92 wird von einem Wellenfortsatz 94 begrenzt, der am oberen Ende der Welle 83 befestigt ist und einen unterschnittenen Teil der Welle bildet, in welchem sich ein Kragen 95 des Drehknopfs 92 hineinerstreckt. Der Drehknopf besitzt noch einen Schlitz 96 (Fig. 2, 3), um einen Hebel 97 zu bilden, der eine Daumen oder Vorsprung 98 trägt. Das Gehäuse 1 bildet eine kreisförmige Aussparung 99, in die sich das untere Ende des Drehknopfs 92 hineinerstreckt, und der Daumen 98 liegt mit Vorspannung an der Ringwand der Aussparung 99 an, so daß der Drehknopf normalerweise relativ zum Gehäuse 1 festgelegt ist. Wenn der Hebel 97 nach innen des Knopfes 92 gepreßt wird, kommt der Daumen 98 außer Eingriff von der Ringwand der Aussparung 99, und der Knopf 92 kann gedreht werden.

Falls der Oszillationsbetrieb abgeschaltet ist (Schalter 86 in Stellung 86a), führt die Drehung des Knopfes 92 bei der Kupplung zur Welle 83 zur Drehung der Schrägscheibe 82, welche die Abtriebswelle 42 in Abhängigkeit von der Drehrichtung des Knopfes 92 nach oben oder unten verschiebt. Dadurch wird das Werkzeug 100 nach oben oder unten verschoben, wie der Fall gerade liegt. Auf diese Weise kann die Arbeitslänge 1 des Werkzeugs 100 in der Betriebsweise der einfachen Drehung innerhalb der Hublänge der Schrägscheibe 82 eingestellt werden.

Der Motor 20 kann verschiedene Arten (Elektromotor, Druckluftmotor) und Nennleistungen umfassen, sollte jedoch für wenigstens 1000 U/min an der Abtriebswelle 42 sorgen, um zu einem guten Schliffbild zu gelangen. Außerdem sollte der Motor richtungsumkehrbar sein, um die Schleifwalze 100 gegen die Führungsrichtung des Geräts laufen lassen zu können. Eine Motor-Type von 1500 bis 200 U/m und von 500 oder 550 W hat sich als für die Bedürfnisse des Geräts entsprechend erwiesen.

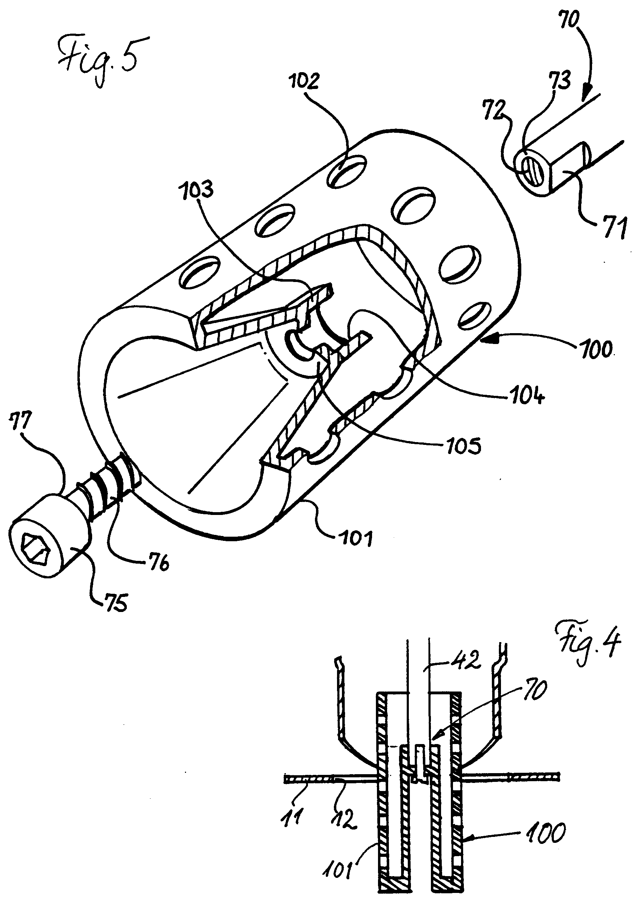

Die Abtriebswelle 42 weist ein als Werkzeughalter 70 (Fig. 4 und 5) ausgebildetes Ende auf. Das Werkzeug 100 besitzt eine generell zylindrische äußere Oberfläche 101, die für schleif-, Raspel- oder Feilarbeiten ausgebildet ist, und kann eine Mehrzahl von radialen Löchern 102 aufweisen. Das Werkzeug weist eine zentrale Nabe 103 mit einem nicht kreisförmigen Loch 104 auf, um auf den Werkzeughalter 70 gesteckt zu werden, der eine Abflachung 71 besitzt. Der Werkzeughalter 70 weist auch eine Schraubbohrung 72 für eine Kopfschraube 75 auf, die eine Sechskant-Imbusöffnung besitzt, um das Werkzeug 100 an dem Werkzeughalter 70 zu halten. Die Nabe 103 besitzt auch einen Kragen 105, der einen Durchlaß für den Schraubenschaft 76 freiläßt und Anlageflächen oder Schultern für die Endfläche 73 des Werkzeughalters 70 und der Ringfläche 77 des Schraubenkopfs 75 bietet.

Das Werkzeug 100 in Fig. 4 ist mit einem kleineren Durchmesser der äußeren zylindrischen Oberfläche 101 gezeigt, was eine Wahlmöglichkeit für die verschiedenen Werkzeuge darstellt, die an der Maschine befestigt werden können.

Im Falle von Schleifwalzen als Werkzeug kann die Schleifoberfläche von Schleifpapier gebildet werden. Der Walzenkörper ist dann mit einer haftenden Oberfläche versehen, die z.B. aus Gummi, Silicon, oder Klettverschluß-Ausbildung bestehen kann. Das Schleifpapier kann in Form von gelochten Schleifhülsen vorliegen, die auf den mit radialen Absaugbohrungen versehenen Walzenkörper aufgeschoben werden. Zur Registrierung der Schleifpapieröffnungen mit den Absaugbohrungen können die Schleifhülse und der Walzenkörper mit Feder-Nut-Ausbildungen versehen sein.

Im Falle der Verwendung von Schleifblättern kann man Klettverschluß-Ausbildungen an den Innenseiten von Schleifblatt und Walzenkörper verwenden. Die Kombination von Innenseitenbeschichtung der Schleifblätter und von gummiertem Waltenkörper ist ebenfalls brauchbar.

Man kann auf dem Walzenkörper noch Zusatzeinrichtungen anbringen. Eine solche Zusatzeinrichtung ist ein Polierzusatz in Form einer Gewebehülse mit Lammfelloberfläche oder dergleichen. Eine weitere Zusatzeinrichtung besteht in dem sogenannten Anlaufring, der bei ausgeschaltetem Oszillationsantrieb angewendet wird. Dieser Anlauf wird über eine verlängerte Arretierschraube (anstelle der Schraube 75) an einem Ende des Walzenkörpers im Sinne eines frei drehenden Lagers befestigt. Ein solcher Anlaufring ermöglicht das "Bündigschleifen" einer Fläche oder Kante, wobei die übrige Oberfläche des Werkstücks unbeschädigt bleibt.

Alternativ zur gezeigten Ausführungsform kann die Gleitkufenplatte 11 der Führungs- und Stützeinrichtung 10 an der Unterseite des Gehäuses 1 in ähnlicher Weise schwenkbar befestigt sein, wie dies von Stichsägen bekannt ist. Die Gleitkufenplatte 11 bestimmt die Führungsachse entlang der Mittellinie (und parallel zur Motorachse 20a), und konzentrich zu dieser Führungsachse sind Führungseinrichtungen an der Unterseite des Gehäuses 1 vorgesehen, die von geeigneten, mit der Platte 11 verbundenen Teilen umgriffen werden, so daß die Platte 11 um ihre Mittellinie schwenken kann. Ein Schraubbolzen ermöglicht die Festlegung der Schwenkstellung der Platte 11.

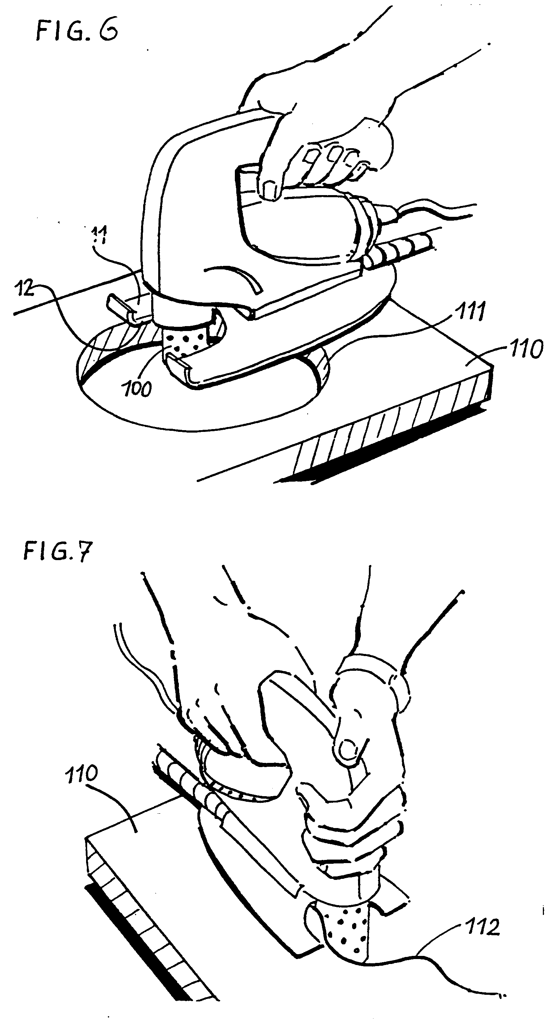

Fig. 6 und 7 zeigen, wie das maschinell angetriebene Werkzeug nach der Erfindung angewendet wird. Ein Werkstück 110 weist einen Ausschnitt 111 auf, der mittels einer Stichsäge hergestellt worden ist und mittels der erfindungsgemäßen Maschine geglättet werden kann. Wie gezeigt, wird die Kufenplatte 11 über die Oberfläche des Werkstücks 110 entlang des Randes des Ausschnittes 111 bewegt, so daß das Werkzeug 100 die Oberfläche des Ausschnitts 111 schleift. Diese Arbeit kann sogar einhändig durch Halten des Griffs 6 ausgeführt werden. Es wird darauf hingewiesen, daß sich der Griff 6 im großen und ganzen parallel zur Kufenplatte 11 und auch zur allgemeinen Ausdehnung des Gehäuses 1 erstreckt, das den Motor aufnimmt, jedoch senkrecht zur axialen Erstreckung des Werkzeugs 100. Die Werkzeugmaschine kann auch mit beiden Händen gehalten werden, wie es Fig. 7 zeigt, wenn ein Rand oder eine Kantenfläche 112 bearbeitet werden soll.

Die Zahnräder 85, 84 weisen ein Durchmesserverhältnis von 1 : 7 (oder von 1 : 10) auf, d. h. 7 (oder 10) Drehungen der Welle 42 entsprechen einer Drehung des Zahnrades 84 und damit der Schrägscheibe 82. Deshalb dreht sich die Welle 42 sieben (oder zehn) Mal während einer Hin- und Herbewegung. Dies ist für die bequeme Handhabung des Geräts wichtig, und zwar aus folgenden Gründen: Bei einem relativ großflächigen Werkzeug 100 in Form einer Schleifwalze, Raspelwalze oder Feilwalze werden erhebliche Kräfte zwischen der Oberfläche des Werkzeugs 100 und dem Werkstück 110 (Fig. 6, 7) übertragen. Die Kräfte wirken in axialer und in Umdrehungsrichtung des Werkzeugs 100, wobei die Kräfteanteile von der Oberflächengeschwindigkeit des Werkzeugs 100 in Umdrehungsrichtung und in axialer Richtung abhängen. Die Reaktionskräfte in Umdrehungsrichtung können bequem von der Hand am Griff 6 abgefangen werden, während die Hin- und Herbewegung des Werkzeugs 100 nicht so gut von der Hand aufgefangen werden können, weil die Kraftrichtung wechselt. Es ist deshalb wichtig, daß die Arbeitskraft in axialer Richtung nicht sehr groß wird, weil dies sonst zum Stampfen des Geräts führt, wodurch die Bearbeitung des Werkstücks 110 leiden würde.

Das maschinelle Gerät zum Schleifen, Raspeln, Feilen oder Polieren ist im Rahmen der Ansprüche abwandelbar. Beispielsweise kann anstelle eines Elektromotors auch ein Druckluftmotor angewendet werden, wobei dann die Saugleitung vom Abluftstrom so beaufschlagt wird, daß am Werkzeug ein Sog zur Staubentfernung entsteht.

## Patentansprüche

1. Tragbares, maschinelles Schleif-, Raspel-, Feil- oder Poliergerät mit folgenden Merkmalen:
ein Gehäuse (1) mit ersten und zweiten Hohlräumen (4, 5);
ein Motor (20) im ersten Hohlraum (4) und mit einer Antriebswelle (41);
ein Antriebsmechanismus (30), der im zweiten Hohlraum (5) untergebracht ist und mit der Antriebswelle (41) zu seinem Antrieb verbunden ist;
der Antriebsmechanismus (30) umfaßt eine Abtriebswelle (42), eine Einrichtung zum Drehen dieser Abtriebswelle (42) sowie eine Einrichtung zum Oszillieren dieser Abtreibswelle (42);
ein Werkzeughalter (70), der an der Abtriebswelle (42) angebracht ist und zum Halten eines Werkzeugs (100) dient, das eine Bearbeitungsfläche (101) aufweist;
eine Stütz- und Führungseinrichtung (10) zum Abstützen und gegebenenfalls Entlangführen des Gerätes auf einem Werkstück (110);
gekennzeichnet durch folgende Merkmale der Oszillationseinrichtung (80):
eine Zwischenwelle (83), die eine Wellenachse aufweist und über den Antriebsmechanismus (30) mit der Antriebswelle (41) verbunden ist;
eine Schrägscheibe (82), die an der Zwischenwelle (83) mit schrägem Winkel zur Zwischenwellenachse befestigt ist; und
eine Folgeeinrichtung (81), die an der Schrägscheibe (82) anliegt und mit der Abtriebswelle (42) verbunden ist, so daß, wenn die Zwischenwelle (83) und die Schrägscheibe (82) rotieren, die Folgeeinrichtung (81) hin- und hergeht und das Werkzeug (100) entlang der Achse der Abtriebswelle (42) oszillierend antreibt.

2. Gerät nach Anspruch 1,
dadurch gekennzeichnet,
daß der Antriebsmechanismus eine Zahnradübersetzung (84, 85) mit einem schaltbaren Zahnrad (85) umfaßt und
daß eine Schalteinrichtung (86) zur Verschiebung des schaltbaren Zahnrads (85) in und aus dem Eingriff mit der Zahnradübersetzung vorgesehen ist, um die Oszillationseinrichtung (80) ein- oder auszuschalten.

3. Gerät nach Anspruch 2,
gekennzeichnet durch eine Einrichtung (90) zur manuellen Einstellung der Drehstellung der Zwischenwelle (83) und der Schrägscheibe (82), wenn die Oszillationseinrichtung (80) ausgeschaltet ist.

4. Gerät nach einem der Ansprüche 1 bis 3,
dadurch gekennzeichnet,
daß der Antriebs der Oszillationseinrichtung (80) zum Antrieb der Abtriebswelle (42) so eingerichtet ist, daß auf eine Hin- und Herbewegung in axialer Richtung der Abtriebswelle eine Vielzahl von Umdrehungen der Abtriebswelle kommen, so daß die Drehbewegung des Werkstücks die Hauptbewegung ist und die hauptsächlichste Werkzeugkraft zur Folge hat.

5. Gerät nach einem der Ansprüche 1 bis 4,
dadurch gekennzeichnet,
daß die Folgeeinrichtung eine mit Nut versehene Rolle (81) umfaßt, die mit der Abtriebswelle (42) verbunden ist.

6. Gerät nach einem der Ansprüche 1 bis 5,
dadurch gekennzeichnet,
daß die Stütz- und Führungseinrichtung (10) eine Gleitkufenplatte (11) mit Führungsachse aufweist, um das Gerät parallel zur Führungsachse auf einem Werkstück (110) zu führen, und
daß die Stütz- und Führungseinrichtung (10) eine schwenkbare Befestigungseinrichtung (13, 14, 15, 16) umfaßt, welche die Gleitkufenplatte (11) am Gehäuse (1) befestigt und die Festlegung der Gleitkufenplatte (11) in ausgewählten Schwenkstellungen relativ zur Führungsachse ermöglicht.

7. Gerät nach Anspruch 6,
dadurch gekennzeichnet,
daß die Gleitkufenplatte (11) mit einer Aussparung (12) ausgebildet ist, durch welche sich das Werkzeug (100) erstreckt.

8. Gerät nach einem der Ansprüche 1 bis 7,
dadurch gekennzeichnet,
daß eine Saugleitungseinrichtung (14) mit einem ersten und zweiten Ende (18) vorgesehen ist, wobei das erste Ende eine Öffnung benachbart des Werkzeughalters (70) aufweist und das zweite Ende (18) mit einer Saugquelle verbindbar ist.

9. Gerät nach einem der Ansprüche 1 bis 8,
dadurch gekennzeichnet,
daß das Werkzeug (100) eine zylindrische Wandung aufweist, an deren Außenoberfläche die Mittel zum Schleifen, Raspeln, Feilen oder Polieren angebracht sind, und eine an der zylindrischen Wandung befestigte zentrale Nabe (103) besitzt, die zur Kupplung mit der Abtriebswelle (42) ausgebildet ist.

10. Gerät nach Anspruch 9,
dadurch gekennzeichnet,
daß die zylindrische Wandung eine Mehrzahl von Absauglöchern (104) aufweist.

11. Gerät nach Anspruch 10,
dadurch gekennzeichnet,
daß die Außenoberfläche (101) Teil einer Schleifhülse ist, die auf einen Walzenkörper aufsteckbar ist, wobei die Ausrichtung der Schleifhülse mit ihren Absauglöchern auf die Absauglöcher des Walzenkörpers durch eine Nut-Feder-Ausbildung an der Innenseite der Schleifhülse und der Außenseite des Walzenkörpers sichergestellt wird.

## Claims

1. A portable mechanical sanding, rasping, filing or polishing device having the following features:
a casing (1) having first and second cavities (4, 5);
a motor (20) in the first cavity (4) and having a drive shaft (41);
a drive mechanism (30) which is disposed in the second cavity (5) and is connected to the drive shaft (41) for its drive;
the drive mechanism (30) comprises an output shaft (42), a means of rotating this output shaft (42) and a means for oscillating said output shaft (42);
a tool-holder (70) which is mounted on the output shaft (42) and serves to hold a tool (100), which output shaft has a machining surface (101);
a support and guide means (10) for supporting and if required guiding the device along a workpiece (110);
characterised by the following features of the oscillation means (80):
an intermediate shaft (83) which has a shaft axis and is connected to the drive shaft (41) via the drive mechanism (30);
an inclined disc (82) which is fixed on the intermediate shaft (83) at a sloping angle to the intermediate shaft axis; and
a follow-up device (81) which bears against the inclined disc (82) and is connected to the output shaft (42) so that when the intermediate shaft (83) and the inclined disc (82) rotate the follow-up device (81) reciprocates and drives the tool (100) with an oscillating motion along the axis of the output shaft (42).

2. A device according to claim 1, characterised in that the drive mechanism comprises a gearwheel transmission (84, 85) with a shiftable gearwheel (85) and in that a shift mechanism (86) is provided to displace the shiftable gearwheel (85) into and out of engagement with the gearwheel transmission in order to switch the oscillation means (80) on or off.

3. A device according to claim 2, characterised by a device (90) for manual adjustment of the rotary position of the intermediate shaft (83) and of the inclined disc (82) when the oscillation means (80) is switched off.

4. A device according to any one of claims 1 to 3, characterised in that the drive for the oscillation means (80) is so arranged relatively to the drive of the output shaft (42) that one reciprocation of the output shaft in the axial direction corresponds to a plurality of revolutions of the output shaft so that the rotary movement of the workpiece is the main movement and results in the principal tool force.

5. A device according to any one of claims 1 to 4, characterised in that the follow-up device comprises a grooved roller (81) connected to the output shaft (42).

6. A device according to any one of claims 1 to 5, characterised in that the support and guide means (10) comprises a skid plate (11) with a guide axis in order to guide the device parallel to the guide axis on a workpiece (110), and
in that the support and guide means (10) comprises a pivotable fixing means (13, 14, 15, 16) which fixes the skid plate (11) on the casing (1) and enables the skid plate (11) to be fixed in selected pivoted positions relatively to the guide axis.

7. A device according to claim 6, characterised in that the skid plate (11) has a recess (12) through which the tool (100) extends.

8. A device according to any one of claims 1 to 7, characterised in that a suction line device (14) is provided with a first and second end (18), the first end having an opening adjacent the tool-holder (70) and the second end (18) being connectable to a suction shaft.

9. A device according to any one of claims 1 to 8, characterised in that the tool (100) has a cylindrical wall on the outer surface of which the sanding, rasping, filing or polishing means are disposed and has a central hub (103) which is fixed on the cylindrical wall and which is constructed for coupling to the output shaft (42).

10. A device according to claim 9, characterised in that the cylindrical wall comprises a plurality of suction-extraction holes (104).

11. A device according to claim 10, characterised in that the outer surface (101) is part of a sanding sleeve which can be fitted over a roller body, the alignment of the sanding sleeve with its suction-extraction holes aligned on to the suction-extraction holes of the roller body being ensured by a tongue and groove construction on the inside of the sanding sleeve and on the outside of the roller body.

## Revendications

1. Appareil mécanique portatif de ponçage, de râpage, de limage ou de polissage, présentant les particularités suivantes :
un carter (1) comportant des premier et deuxième espaces creux (4, 5) ;
un moteur (20) disposé dans le premier espace creux (4), et un arbre d'entraînement (41) ;
un mécanisme d'entraînement (30) qui est logé dans le deuxième espace creux (5), et qui est relié à l'arbre d'entraînement (41) pour l'entraînement de ce dernier ;
le mécanisme d'entraînement (30) comportant un arbre de sortie (42), un dispositif de rotation de cet arbre de sortie (42), ainsi qu'un dispositif destiné à faire osciller cet arbre de sortie (42) ;
un porte-outil (70) qui est fixé sur l'arbre de sortie (42), et qui sert à la retenue d'un outil (100) comportant une surface de traitement (101) ;
un dispositif de support et de guidage (10) destiné à supporter l'appareil et, le cas échéant, à le guider le long d'une pièce (110) ;
caractérisé par les particularités suivantes du dispositif d'oscillation (80) :
un arbre intermédiaire (83) comportant un axe d'arbre, et qui est relié à l'arbre d'entraînement (41) par l'intermédiaire du mécanisme d'entraînement (30) ;
un disque oblique (82), qui est fixé sur l'arbre intermédiaire (83) suivant un angle oblique par rapport à l'axe de l'arbre intermédiaire ; et
un dispositif séquentiel (81), qui prend appui sur le disque oblique (82) et est relié à l'arbre de sortie (42), de sorte que, lorsque l'arbre intermédiaire (83) et le disque oblique (82) sont en rotation, le dispositif séquentiel (81) se déplace en va-et-vient et entraîne l'outil (100) en oscillation le long de l'axe de l'arbre de sortie (42).

2. Appareil selon la revendication 1,
caractérisé en ce que
le mécanisme d'entraînement comporte une transmission à roues dentées (84, 85) avec une roue dentée enclenchable (85), et en ce qu'il est prévu un dispositif d'enclenchement (86) pour déplacer la roue dentée enclenchable (85) et la mettre en ou hors prise avec la transmission à roues dentées, afin de mettre le dispositif d'oscillation (80) en marche ou de l'arrêter.

3. Appareil selon la revendication 2,
caractérisé par un dispositif (90) destiné au réglage manuel de la position de rotation de l'arbre intermédiaire (83) et du disque oblique (82) lorsque le dispositif d'oscillation (80) est arrêté.

4. Appareil selon l'une quelconque des revendications 1 à 3,
caractérisé en ce que,
par rapport à l'entraînement de l'arbre de sortie (42), l'entraînement du dispositif d'oscillation (80) est agencé de telle sorte qu'un mouvement de va-et-vient en direction axiale de l'arbre de sortie est suivi de nombreuses rotations de l'arbre de sortie, de sorte que le mouvement de rotation de la pièce soit le mouvement principal et engendre la force principale de l'outil.

5. Appareil selon l'une quelconque des revendications 1 à 4,
caractérisé en ce que
le dispositif séquentiel comporte un galet (81) muni d'une gorge, qui est relié à l'arbre de sortie (42).

6. Appareil selon l'une quelconque des revendications 1 à 5,
caractérisé en ce que
le dispositif de support et de guidage (10) comporte une plaque à patin (11) avec un axe de guidage afin de guider l'appareil sur une pièce (110) parallèlement à l'axe de guidage, et
en ce que le dispositif de support et de guidage (10) comprend un dispositif de fixation pivotant (13, 14, 15, 16), au moyen duquel la plaque à patin (11) est fixée sur le carter (1), et qui permet de bloquer la plaque à patin (11) dans des positions pivotées choisies par rapport à l'axe de guidage.

7. Appareil selon la revendication 6,
caractérisé en ce que
la plaque à patin (11) est réalisée avec un évidement (12) à travers lequel s'étend l'outil (100).

8. Appareil selon l'une quelconque des revendications 1 à 7,
caractérisé en ce que
il est prévu un dispositif à conduite d'aspiration (14) comportant une première et une deuxième extrémité (18), la première extrémité comportant un orifice au voisinage du porte-outil (70), et la deuxième extrémité (18) pouvant être reliée à une source d'aspiration.

9. Appareil selon l'une quelconque des revendications 1 à 8,
caractérisé en ce que
l'outil (100) comporte une paroi cylindrique, sur la surface extérieure de laquelle sont fixés les moyens destinés au ponçage, râpage, limage ou polissage, et un moyeu central (103) fixé sur la paroi cylindrique, qui est agencé pour être accouplé avec l'arbre de sortie (42).

10. Appareil selon la revendication 9,
caractérisé en ce que
la paroi cylindrique comporte une pluralité d'orifices d'aspiration (104).

11. Appareil selon la revendication 10,
caractérisé en ce que
la surface extérieure (101) fait partie d'une douille de ponçage pouvant être emboîtée sur un corps de cylindre, l'alignement de la douille de ponçage avec ses orifices d'aspiration sur les orifices d'aspiration du corps du cylindre étant assuré par des rainures et des languettes pratiquées sur la face intérieure de la douille de ponçage et sur la face extérieure du corps du cylindre.
